# FASCICULE DE BREVET EUROPEEN

(11) **EP 4 435 367 B1**
(45) Date de publication et mention de la délivrance du brevet: **23.09.2026**
(21) Numéro de dépôt: 24164708.0
(22) Date de dépôt: 20.03.2024
(51) Int. Cl.: F28D 7/16, G01F 23/2965

(54) **DISPOSITIF DE DÉTERMINATION D'UN TAUX DE CHARGE D'UN SYSTÈME DE STOCKAGE THERMIQUE**
VORRICHTUNG , UM DEN LADESTATUS EINES WÄRMESPEICHERS ZU ERMITTELN
APPARATUS FOR DETERMINING THE CHARGE RATE OF A THERMAL STORE

(30) Priorité: 22.03.2023 FR 2302700
(43) Date de publication de la demande: 25.09.2024
(73) Titulaire: Commissariat à l'Energie Atomique et aux Energies Alternatives, 75015 Paris (FR)
(72) Inventeur: BENTIVOGLIO, Fabrice, 38054 GRENOBLE Cedex 09 (FR); SORIANO, Olivier, 38054 GRENOBLE Cedex 09 (FR); MATRINGE, Gilles, 38054 GRENOBLE Cedex 09 (FR)
(74) Mandataire: Hautier IP

(56) Documents cités:
- EP-A1- 3 264 018
- DE-C1- 10 235 581
- US-B2- 10 281 269

## Description

### DOMAINE TECHNIQUE

L'invention concerne le domaine des Systèmes de Stockage Thermiques (SST) par Matériaux à Changement de Phase (MCP), et plus particulièrement, l'intégration d'un dispositif permettant de mesurer l'état de charge du système. L'invention trouvera plus particulièrement son application pour tous les SST présentant une interface entre le MCP et un ciel de gaz.

L'invention trouvera par exemple son application dans les réseaux de chaleur et/ou de froid, urbains, ruraux ou industriels ainsi que dans le stockage de l'énergie solaire. L'invention pourra également trouver des applications dans l'habitat ou encore le transport thermique hors réseaux (camions, bateaux...).

### ETAT DE LA TECHNIQUE

Le stockage thermique peut être réalisé par un changement d'état caractérisé par une enthalpie de transformation. Dans ce cas, le stockage se fait par matériau à changement de phase. C'est l'enthalpie de changement de phase qui est stockée. La charge du système de stockage de chaleur s'accompagne de la fusion du matériau de stockage, tandis que la décharge est réalisée par la solidification dudit matériau. C'est l'inverse lorsque l'on considère un stockage de frigories pour un réseau de froid.

Un des avantages majeurs de cette technologie est que le changement de phase se fait à température constante. Par conséquent, la décharge de l'énergie stockée peut se faire à température quasiment constante et proche de la température de changement de phase du matériau.

L'enthalpie de changement de phase est relativement importante en comparaison de la variation d'énergie sensible d'un matériau. Par conséquent, les systèmes de stockage avec MCP sont intéressants, car la quantité d'énergie stockée par unité de volume (et de masse) est supérieure à celle obtenue par un système sensible (meilleure densité de stockage). De ce fait, les volumes de stockage et de matériaux sont réduits ce qui permet de limiter les pertes thermiques qui sont proportionnelles à la surface extérieure du réservoir.

Un système de mise en oeuvre du stockage de chaleur latente est l'utilisation d'échangeur de technologie tubes et calandre. Une calandre dans laquelle circule un fluide est parcourue par un faisceau de tubes dans lesquels un autre fluide s'écoule. Les deux fluides échangent de l'énergie par conduction à travers l'épaisseur des tubes. Dans le cas du stockage thermique, cette technologie est adaptée, il n'y a plus échange entre deux fluides en mouvement, mais entre un fluide caloporteur qui circule dans les tubes et le MCP qui est fixe dans la calandre (mis à part les mouvements de convection naturelle en phase liquide). Lors de la charge, le fluide caloporteur arrive à une température supérieure à la température de fusion du MCP et cède de l'énergie à celui-ci, ce qui entraine sa fusion ; lors de la décharge, le fluide caloporteur entre à une température inférieure à la température de fusion du MCP et récupère l'énergie précédemment stockée, ce qui entraine la solidification du MCP.

Comme présenté plus haut, l'intérêt du stockage thermique est manifeste, particulièrement dans le domaine des réseaux de chaleur et de froid. Cependant, une utilisation pertinente d'un tel dispositif dépend en grande partie de la capacité du gestionnaire de réseau à pouvoir mettre en œuvre une vraie stratégie énergétique s'appuyant sur des données technico-économiques de consommations/productions en temps réel, ainsi que sur des prévisions adaptées. Dans cette logique, le gestionnaire pourra ainsi choisir de manière rationnelle quand il doit charger ou décharger son moyen de stockage. La mise en œuvre de cette stratégie d'utilisation n'est réalisable que si l'état de charge ou le taux de charge (soit la quantité de calories ou de frigories stockées) du système de stockage est connu. Or, la mesure de l'état de charge d'un stockage thermique par chaleur latente est problématique, car la chaleur est stockée à température constante, on peut donc difficilement la quantifier à l'aide de détecteurs de température.

Plusieurs solutions pour connaître le taux de charge ont été développées dans le passé. Un des moyens pour connaitre l'état de charge d'un stockage thermique consiste à enregistrer son historique d'exploitation. Pour cela, la quantité d'énergie injectée ou prélevée au stockage est mesurée à l'aide d'un débitmètre et de détecteurs de températures placés dans le circuit du fluide caloporteur, en entrée et sortie du système de stockage thermique. En connaissant l'état initial de charge lors de la mise en service du stockage, on peut donc théoriquement connaitre l'état de charge du stockage suite à différentes opérations.

Cette méthode comporte de nombreux désavantages : les pertes thermiques au niveau des surfaces extérieures doivent être finement simulées, ou mesurées et prises en compte, la précision de l'estimation du taux de charge va se dégrader au court du temps par l'accumulation d'erreurs, beaucoup d'éléments électroniques d'acquisition, de mémoire et de calculs, couteux et peu fiables sont nécessaires.

Le laboratoire Autrichien ASiC propose de mesurer le taux de charge d'un réservoir de stockage latent par la mesure de la pression du ciel du réservoir. Cette idée repose sur le fait que les MCP utilisés présentent une forte expansion volumique lors de leur fusion (de 5% à 15%). Une élévation de pression a donc lieu dans le ciel entre l'état entièrement solide et l'état entièrement liquide. Il est ainsi possible de corréler la pression mesurée dans le ciel à la fraction de liquide formée et donc de déterminer le taux de charge. En pratique, cette méthode présente de nombreux inconvénients. Premièrement, elle nécessite une parfaite étanchéité du volume de stockage afin de pouvoir observer la variation de pression. De plus, ces variations de pressions soumettent le réservoir à des augmentations fortes de pression ayant un impact sur la conception de la cuve. Par ailleurs, l'influence de la température sur la pression du ciel de gaz doit aussi être prise en compte, car son impact peut être non négligeable. Cet aspect peut avoir un impact non négligeable sur le coût du dispositif.

Mesurer le taux de charge en mesurant le débit de gaz qui sort/rentre du/dans le ciel de gaz lors des cycles de fusion/solidification a aussi été proposé. Cette méthode de mesure présente les avantages d'être non intrusive et de ne pas être perturbée par les pertes thermiques du stockage. Néanmoins, ce dispositif présente plusieurs inconvénients: l'estimation du taux de charge se base sur l'intégration au cours du temps d'un débit qui aura nécessairement une incertitude de mesure, il faut assurer une étanchéité couteuse et complexe de la cuve.

La publication scientifique Zsembinszki, G.; Orozco, C.; Gasia, J.; Barz, T.; Emhofer, J.; Cabeza, L.F. Evaluation of the State of Charge of a Solid/Liquid Phase Change Material in a Thermal Energy Storage Tank. Energies 2020, 13, 1425, propose une synthèse des techniques de mesure de l'état de charge d'un stockage MCP référencées dans la littérature dont : - des mesures par différence de conductivité électrique du MCP ente liquide et solide qui se révèlent trop intrusives et complexes à mettre en œuvre dans des SST de grande dimension ; - une méthode basée sur la propagation du son (sorte de radar), qui nécessite une calibration complexe et pourrait être très perturbée pour un stockage tubes et calandre avec de nombreux tubes et ailettes métalliques ; - la mesure du changement de résistance électrique d'une membrane en silicone qui change avec la contrainte mécanique. Cette membrane est placée sur un piquage sur la paroi du stockage, ce qui pourrait poser des problèmes d'étanchéité. Par ailleurs, cette méthode ne marche que pour des systèmes à calandre fermée.

Il est par ailleurs connu que le taux de charge (ou état de charge) d'un stockage thermique correspond à la part d'énergie thermique utile encore disponible divisée par l'énergie thermique totale stockable.

L'énergie thermique utile disponible dans un moyen de stockage dit latent est la somme des énergies sensible et latente du système.

La part d'énergie sensible disponible dans un système de stockage latent est facilement mesurable par une ou plusieurs sondes de températures. L'importance de cette part d'énergie dépend de la capacité calorifique du matériau utilisé et de la différence entre la température du système et celle de la source (chaude ou froide) de l'application. Plus cet écart est grand et plus la part d'énergie sensible stockée sera élevée.

L'énergie thermique latente disponible dans un système de stockage latent correspond, quant à elle, à la masse du MCP liquide en présence multipliée par sa chaleur latente de changement de phase (solide-liquide). L'énergie thermique latente totale stockable correspond à la masse totale de MCP multipliée par sa chaleur latente. Finalement, dans le cas où la part d'énergie sensible du stockage est négligeable, le taux de charge d'un stockage latent peut donc être défini par : $Taux de charge = \frac{masse liquide de MCP}{masse totale de MCP}$

La masse totale de MCP est constante et connue puisqu'il s'agit d'un des paramètres de conception et de dimensionnement du système de stockage d'énergie thermique. Il suffit donc de pouvoir déterminer la masse de liquide. Or, la masse de liquide peut-être facilement déterminé à partir du volume occupé par ce liquide si l'on connait sa densité liquide. Dans le cas d'un stockage de frigories, c'est la masse de solide sur la masse totale qui sera égale au taux de charge.

Ainsi, plusieurs solutions ont été recherchées pour déterminer la masse liquide de MCP. On connait du document EP 3 264 018, qui présente les caractéristiques du préambule de la revendication 1, une méthode qui propose de mesurer le taux de charge en estimant la hauteur de solide dans la cuve à l'aide de la mesure de fréquence d'une corde vibrante. La corde est fixée en haut du stockage, et le niveau solide du MCP constitue son second point fixe. La longueur libre de la corde dépend donc de la hauteur de solide. Dans un stockage où le MCP est entièrement solide la longueur libre de la corde est très courte, dans un stockage entièrement liquide la longueur libre de la corde est à son maximum. La fréquence de vibration d'une corde dépendant de sa longueur, le taux de charge du stockage est directement l'image de la fréquence de vibration. Ainsi, en excitant la corde on peut en mesurant la fréquence de vibration directement obtenir le taux de charge du stockage. Cette méthode, si elle est certainement très précise, est néanmoins très intrusive et serait donc chère et complexe à mettre en oeuvre.

Il existe également une méthode de mesure décrite dans le document WO 2016/051377 consistant en l'ajout d'un liquide compatible et non miscible avec le MCP contenu dans le volume de stockage. La quantité de fluide de mesure doit être suffisante pour assurer le fait que la surface apparente en partie haute du réservoir soit plane lorsque le réservoir est totalement déchargé. Toute hausse ou baisse du niveau de ce fluide est causée par la fusion/solidification du MCP, du fait de la variation volumique du changement de phase. Il est donc possible d'établir une loi fournissant l'état de charge en fonction du niveau de fluide de mesure. Le système utilise un détecteur optique ou laser introduit dans la cuve pour suivre le déplacement du niveau de hauteur du fluide de mesure. Le principal inconvénient du système est la quantité de fluide de mesure nécessaire pour recouvrir tout le MCP quelle que soit la configuration. L'impact sur la densité du système est direct et éventuellement non négligeable. Cette méthode est de plus très intrusive, car le détecteur est interne à la cuve.

Il existe donc le besoin de proposer un dispositif de détermination du taux de charge d'un système de stockage thermique qui résolve tout ou partie de ces inconvénients.

### RESUME

Pour atteindre cet objectif, selon un mode de réalisation, l'invention prévoit un dispositif de détermination d'un taux de charge d'un système de stockage thermique (SST) par chaleur latente avantageusement destiné à coopérer avec un SST,
- le SST comprenant une cuve comprenant au moins une paroi latérale et recevant un MCP solide/liquide dont le changement de phase s'accompagne d'une variation volumique, et un ciel de gaz, avec un échangeur thermique plongeant dans la cuve et apte à recevoir un fluide caloporteur,
- le SST étant configuré pour qu'une partie d'un front de séparation entre le ciel de gaz et le MCP ait, dans la cuve, une position représentative du taux de charge du SST,
- le SST étant dans un état complètement déchargé lorsque le matériau à changement de phase est sensiblement totalement dans un état solide définissant un premier niveau de hauteur du front de séparation et dans un état complètement chargé, lorsque le matériau à changement de phase est sensiblement totalement dans un état liquide définissant un deuxième niveau de hauteur du front de séparation,
- le dispositif comprenant au moins un détecteur destiné à être agencé sur une paroi latérale de la cuve et avantageusement une carte électronique reliée à au moins un détecteur et destinée à déterminer le taux de charge du SST, avantageusement à un moment déterminé de son fonctionnement, caractérisé en ce que :
- le au moins un détecteur est un détecteur à lame vibrante destiné à être agencé à une hauteur prédéfinie dans une zone de mesure dont la hauteur est définie entre le premier niveau de hauteur et le deuxième niveau de hauteur, et à être en contact alternativement avec le ciel de gaz ou le MCP liquide en fonction de la variation volumique du MCP, et à fournir un signal en fonction de son contact avec le ciel de gaz ou le MCP liquide,
- avantageusement, la carte électronique détermine le taux de charge du SST, avantageusement à un moment déterminé de son fonctionnement, en fonction du signal fourni par le au moins un détecteur à lame vibrante et de sa hauteur prédéfinie dans la zone de mesure.

Le dispositif selon l'invention présente une détermination du taux de charge qui est plus précise notamment que les états de la technique prenant en considération l'interface liquide/solide. Avec le dispositif selon l'invention les risques de fausses mesures sont limités puisque la lame vibrante détecte le front de séparation MCP liquide/ciel de gaz, il n'y a donc pas de contact avec le MCP solide et il n'y a donc pas de risque que le MCP solide en se décrochant de la paroi de la cuve induise des erreurs de mesures. Par ailleurs, le dispositif selon l'invention permet une mesure physique directe sans intégration dans le temps. Il n'y a donc pas de dérive du dispositif de détermination dans le temps. Le dispositif est applicable à des cuves dont le ciel de gaz est fermé ou bien ouvert. Enfin, le dispositif de détermination est très faiblement intrusif facilitant sa mise en œuvre et limitant les impacts sur le fonctionnement du SST. Avantageusement, la lame vibrante traverse la paroi latérale. La lame vibrante comprend une partie à l'intérieure de la cuve et une partie à l'extérieure de la cuve. La lame vibrante est par exemple vissée par l'extérieur de la cuve sur la paroi latérale, elle est donc inspectable et démontable en cas de panne ou pour un remplacement. Avantageusement, la précision de la détermination du taux de charge peut-être facilement augmentée en modulant le nombre de lames vibrantes.

Selon un autre aspect, l'invention concerne un système de stockage thermique (SST) par chaleur latente comprenant une cuve comprenant au moins une paroi latérale et recevant un MCP solide/liquide dont le changement de phase s'accompagne d'une variation volumique, et un ciel de gaz, et un échangeur thermique plongeant dans la cuve et apte à recevoir un fluide caloporteur,
- le SST étant configuré pour qu'une partie d'un front de séparation entre le ciel de gaz et le MCP ait, dans la cuve, une position représentative du taux de charge du SST,
- le SST étant dans un état complètement déchargé lorsque le matériau à changement de phase est sensiblement totalement dans un état solide définissant un premier niveau de hauteur du front de séparation et dans un état complètement chargé, lorsque le matériau à changement de phase est sensiblement totalement dans un état liquide définissant un deuxième niveau de hauteur du front de séparation,
- le SST comprenant un dispositif de détermination d'un taux de charge du SST comprenant au moins un détecteur agencé sur une paroi latérale de la cuve et avantageusement une carte électronique reliée à l'au moins un détecteur et destinée à déterminer le taux de charge du SST, avantageusement à un moment déterminé de son fonctionnement, Caractérisé en ce que :
- le au moins un détecteur est un détecteur à lame vibrante agencé à une hauteur prédéfinie, dans une zone de mesure dont la hauteur est définie entre le premier niveau de hauteur et le deuxième niveau de hauteur, et en contact alternativement avec le ciel de gaz ou le MCP liquide en fonction de la variation volumique du MCP, et à fournir un signal en fonction de son contact avec le ciel de gaz ou le MCP liquide,
- la carte électronique détermine le taux de charge du SST, avantageusement à un moment déterminé de son fonctionnement, en fonction du signal fourni par le au moins un détecteur à lame vibrante et de sa hauteur prédéfinie dans la zone de mesure.

Avantageusement, le dispositif ou SST comprend une pluralité de détecteurs à lame vibrante disposés à des hauteurs différentes dans la zone de mesure.

Ce dispositif permet ainsi de déterminer le taux de charge, quel que soit l'état de charge du moyen de stockage d'énergie par chaleur latente.

Selon encore un autre aspect, l'invention concerne un procédé de mise en place d'un dispositif de détermination d'un taux de charge d'un SST comprenant:
- La définition de la zone de mesure dans laquelle placer le au moins un détecteur à lame vibrante comprenant par exemple les étapes ci-dessous :
   ∘réaliser une décharge complète du SST,
   ∘mesurer le premier niveau de hauteur du front de séparation lorsque le SST de stockage est dans cet état complètement déchargé,
   ∘réaliser une charge complète du SST,
   ∘mesurer le deuxième niveau de hauteur du front de séparation lorsque le SST de stockage est dans cet état complètement chargé,
- Le positionnement du au moins un détecteur à lame vibrante dans la zone de mesure sur une paroi latérale de la cuve à une hauteur prédéfinie.

Selon encore un autre aspect, l'invention concerne un procédé de détermination d'un taux de charge d'un SST comprenant la réception du signal fourni par le au moins un détecteur à lame vibrante, puis la détermination du taux de charge, avantageusement audit moment déterminé, en fonction du signal fourni par chaque détecteur à lame vibrante et leur hauteur prédéfinie dans la zone de mesure.

Le dispositif de détermination, le SST associé et le procédé de détermination selon l'invention sont particulièrement efficaces puisqu'ils permettent d'obtenir directement la masse liquide de MCP et ils n'ont pas besoin de passer par des calculs théoriques prenants en compte le coefficient d'expansion du MCP et/ ou le volume occupé par un fluide de mesure. La détermination est donc simple et rapide avec une précision optimisée et un risque d'erreur très limitée sans risque de dérive de la mesure dans le temps.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

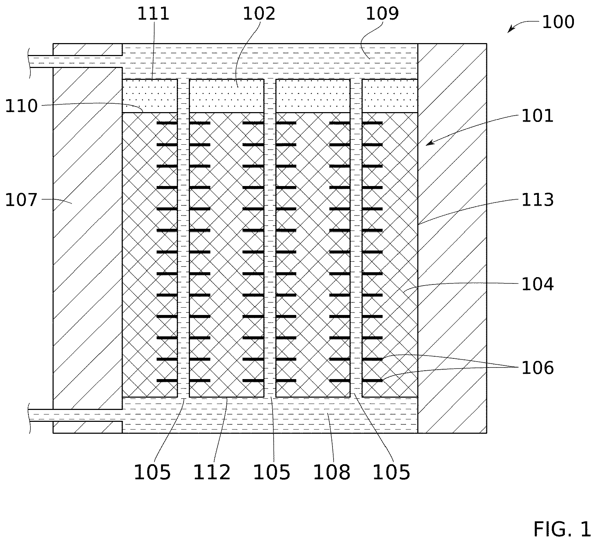

La figure 1 représente une vue en coupe d'un système de stockage thermique selon l'invention.
Les figures 2A à 2D représentent une cuve munie d'un dispositif de détermination selon l'invention lors d'une phase de décharge (solidification du MCP).
Les figures 3A à 3D représentent une cuve munie d'un dispositif de détermination selon l'invention lors d'une phase de charge (liquéfaction du MCP).

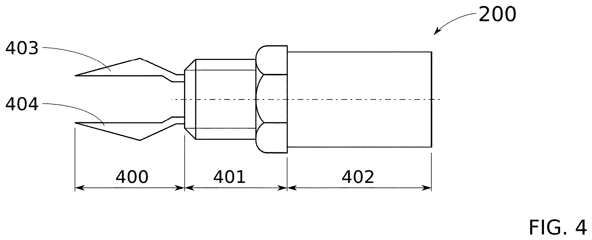

La figure 4 représente un détecteur à lame vibrante utilisé dans le dispositif de détermination selon l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- selon un exemple, la pluralité de détecteur à lame vibrante 200 étant agencé de sorte que la hauteur 206 séparant deux détecteurs à lame vibrante 200 successifs soit identique ;
- Selon un exemple, le dispositif ou le SST comprend de 2 à 10 détecteurs à lame vibrante 200 ;
- Selon un exemple, le dispositif ou le SST ne comprend pas de fluide de mesure additionnel ;
- Selon un exemple, le signal fourni par le au moins un détecteur à lame vibrante 200 est un signal tout ou rien (TOR) ;
- Selon un exemple, le SST est configuré pour que le front de séparation 110 soit sensiblement plan parallèle à l'horizontale lors du fonctionnement du SST ;
- Selon un exemple, l'échangeur thermique comprend un distributeur inférieur 108 agencé en partie inférieure de la cuve 101 et un distributeur supérieur 109 agencé en partie supérieure de la cuve 101, le distributeur inférieur 108 et le distributeur supérieur 109 étant respectivement destinés à l'introduction et l'évacuation du fluide caloporteur dans l'échangeur thermique ;
- Selon un exemple, l'échangeur thermique comprend un fluide caloporteur monophasique et l'échangeur est configuré pour assurer la circulation du fluide caloporteur depuis le distributeur supérieur 109 vers le distributeur inférieur 108 en charge et depuis le distributeur inférieur 108 vers le distributeur supérieur 109 en décharge.

Selon un exemple, le procédé comprend la mise en place d'une pluralité de détecteurs à lame vibrante 200 dans la zone de mesure 203 à des hauteurs différentes prédéfinies.

Pour la suite de la description, on entend par 'haut' et 'bas', ou leurs dérivés, une qualité de positionnement relatif d'un élément dispositif de détermination d'un taux de charge ou du système de stockage thermique lorsque celui-ci est installé de façon fonctionnelle, le 'haut' étant orienté à l'opposé du sol et le 'bas' étant orienté vers le sol. L'extrémité supérieure se situe en haut et l'extrémité inférieure se situe en bas.

On entend par vertical ce qui est parallèle à la direction de la pesanteur donnée notamment par le fil à plomb et horizontal ce qui est perpendiculaire à la verticale. Le haut et le bas étant opposés verticalement.

On entend par horizontal ce qui est perpendiculaire à la verticale.

On entend par transversale, une direction perpendiculaire à une direction longitudinale. Une coupe transversale est une coupe perpendiculaire à l'axe longitudinal.

L'amont et l'aval, l'entrée, la sortie, en un point donné sont pris en référence au sens de circulation du fluide.

On entend par un paramètre "sensiblement égal/supérieur/inférieur à" ou "de l'ordre de" une valeur donnée, que ce paramètre est égal/supérieur/inférieur à la valeur donnée, à plus ou moins 10 % près, voire à plus ou moins 5 % près, de cette valeur.

On entend par connecté fluidiquement ou en connexion fluidique, lorsqu'une ligne assure une connexion par ou dans laquelle circule un fluide.

Dans la présente description, l'expression « A fluidiquement raccordé à B » est synonyme de « A est en connexion fluidique avec B » et ne signifie pas nécessairement qu'il n'existe pas d'organe entre A et B. Les expressions « agencée sur » ou « sur » sont synonymes de « raccordé fluidiquement à ».

On entend par chaud, froid, refroidi, une température relative par rapport à un autre point du système.

L'usage de l'article indéfini " un " ou " une " pour un élément ou une étape n'exclut pas, sauf mention contraire, la présence d'une pluralité de tels éléments ou étapes.

L'invention concerne un système de détermination d'un taux de charge d'un Système de Stockage Thermique (SST). L'invention concerne également un système de stockage thermique (SST) comprenant le dispositif de détermination du taux de charge.

Le dispositif de détermination du taux de charge est applicable à un système de stockage thermique par chaleur latente.

Le stockage de l'énergie thermique permet à la chaleur d'être utilisée en différé. La chaleur peut être stockée sous plusieurs formes. L'invention s'attache au stockage sous la forme de chaleur latente avec l'utilisation de matériaux à changement de phase qui emmagasinent l'énergie à mesure qu'ils changent de phase. Lorsque le matériau atteint sa température de changement de phase, il absorbe une quantité de chaleur pour réaliser la transformation, connue sous le nom de chaleur latente de fusion ou de vaporisation selon le cas. À l'inverse, lorsque le matériau liquide ou gaz est refroidi, il retourne à la phase solide ou liquide en restituant sa chaleur latente.

Bien que la chaleur latente de fusion soit plus faible que la chaleur latente d'évaporation, la transition solide-liquide est la plus prometteuse puisqu'elle permet de limiter l'expansion volumique et ainsi l'augmentation de pression due au changement de phase.

L'invention s'applique à tous les MCPs solide / liquide. Les MCP solide/ liquide s'entendent comme des matériaux qui changent de phase entre un état solide et un état liquide en fonction de sa température. Quand sa température est au-dessus de sa température de fusion, le MCP est à l'état liquide et quand sa température est au-dessous de sa température de fusion, le MCP est à l'état solide.

Préférentiellement, les MCP sont choisis parmi les MCP solide/liquide présentant une variation de volume lors du changement de phase. Préférentiellement, la variation de volume est minimum de l'ordre de 5%, préférentiellement de l'ordre de 10 à 20%. Préférentiellement, les MCP sont choisis parmi les composés organiques et notamment les alcools gras, acide gras et paraffines ou parmi les composés inorganiques comme les sels fondus, les métaux liquides ou les hydrates de sel.

Le MCP peut-être un MCP seul ou bien un mélange de plusieurs MCP. Dans la suite de la description, l'utilisation du terme un MCP n'est pas limitatif.

Le système de stockage d'énergie thermique selon l'invention comprend une cuve de stockage 101 destinée à recevoir le MCP, tel que décrit ci-dessus. La cuve 101 est également dénommée calandre. La cuve 101 est préférentiellement cylindrique pour des raisons de tenue mécanique. La cuve 101 comprend au moins une paroi latérale 113, notamment lorsque la cuve est cylindrique. La cuve 101 peut comprendre plusieurs parois latérales 113 lorsqu'elle présente une autre géométrie par exemple de type parallélépipédique. La cuve 101 comprend également une paroi inférieure 112 et éventuellement une paroi supérieure 111, selon si la cuve 101 est ouverte ou fermée.

Le système de stockage thermique selon l'invention comprend également un échangeur thermique plongeant dans la cuve 101. L'échange thermique est destiné à la circulation d'un fluide caloporteur issu d'un réseau externe de circulation du fluide caloporteur pour stocker et extraire la chaleur du MCP. À titre préféré, le fluide caloporteur est un fluide monophasique dans les conditions de fonctionnement du SST, le plus souvent de l'eau ou de l'eau pressurisée, mais ça peut aussi être l'air, une huile thermique ou encore un sel fondu.

Le système de stockage d'énergie thermique selon l'invention est ainsi du type tubes-calandre.

L'échangeur thermique comprend préférentiellement un faisceau de tubes 105, notamment à ailettes 106, assemblé entre un distributeur inférieur 108 et un collecteur supérieur 109. En fonctionnement, le fluide caloporteur circule à l'intérieur des tubes 105 et échange sa chaleur avec le MCP 103,104 contenu dans la cuve 101.

Avantageusement, la cuve 101 s'étend suivant une direction principale verticale. Avantageusement, l'échangeur thermique s'étend suivant une direction verticale, le faisceau de tubes 105 s'étend verticalement entre le distributeur inférieur 108 et le distributeur supérieur 109, préférentiellement respectivement disposés aux extrémités inférieure et supérieure de la cuve 101. Le distributeur inférieur 108 et le distributeur supérieur 109 sont connectés à un réseau externe de circulation de fluide caloporteur respectivement par une tubulure d'entrée ou de sortie du fluide caloporteur.

Le distributeur supérieur 109 et le distributeur inférieur 108 peuvent former respectivement au moins partiellement la paroi supérieure 111 et la paroi inférieure 112 de la cuve 101. La paroi supérieure 111 de la cuve 101 est avantageusement formée par un couvercle. Avantageusement, la cuve 101 est configurée pour permettre son remplissage. À titre d'exemple, la cuve 101 peut comprendre un couvercle amovible pour permettre son remplissage ou encore un couvercle muni de trappes de remplissage ou encore la cuve comprend une trappe sur une virole sur le côté du système.

La cuve 101 du SST comprend un ciel de gaz 102. Avantageusement, le ciel de gaz 102 est disposé au-dessus du MCP 103,104. Selon une possibilité, le ciel de gaz 102 se situe entre la surface supérieure du MCP 103,104 et la paroi supérieure 111 de la cuve 101, pouvant être formée par le distributeur supérieur 109, notamment par la plaque inférieure du distributeur supérieur 109.

Le dispositif de détermination du taux de charge selon l'invention prend en considération le front de séparation 110 du MCP 103,104 avec le ciel de gaz 102. Le front de séparation 110 du MCP 103,104 avec le ciel de gaz 102 s'entend comme l'interface entre le ciel de gaz 102 et le MCP 103,104 en contact avec le ciel de gaz 102, c'est-à-dire soit le MCP 104 à l'état liquide, soit le MCP à l'état solide 103 en fonction des phases de fonctionnement du SST.

La position, dans la cuve, du front de séparation 110 est destinée à être représentative du taux de charge du SST.

Avantageusement, le dispositif de détermination du taux de charge ne nécessite pas la présence d'un fluide de mesure additionnel autre que le MCP liquide/solide. Il a en effet été constaté de manière surprenante que le fluide de mesure n'est pas nécessaire pour permettre le suivi du front de séparation 110 du MCP avec le ciel de gaz.

Le front de séparation 110 du MCP 103,104 avec le ciel de gaz 102 est sensiblement plan avantageusement parallèle à l'horizontale avantageusement sur toute la section transversale de la cuve 100.

La position du front de séparation 110 dans la cuve varie en fonction des variations de volume du MCP. Ces variations de volume sont principalement dues au changement de phase du MCP : c'est-à-dire dues à la fusion ou à la solidification du MCP. On comprend ainsi que la position du front de séparation 110 permet de déterminer le volume et donc la masse de MCP liquide à un temps T.

Selon mode de réalisation de stockage d'énergie thermique sous forme de calories, lorsque le MCP est sensiblement entièrement dans un état solide, le SST est alors complètement déchargé, le front de séparation 110 prenant alors une position définissant un premier niveau de hauteur 201. À l'inverse, lorsque le MCP est sensiblement entièrement dans un état liquide, le SST est alors complètement chargé, le front de séparation 110 prenant alors une position définissant un deuxième niveau de hauteur 202.

Le premier niveau de hauteur 201 correspondant au niveau le plus bas du front de séparation 110 dans la cuve 101 tandis que le deuxième niveau de hauteur 202 correspond au niveau le plus haut du front de séparation 110. En cours de fonctionnement, le front de séparation 110 prend donc une position comprise entre le premier niveau de hauteur 201 et le deuxième niveau de hauteur 202. La hauteur comprise entre le premier niveau de hauteur 201 et le deuxième niveau de hauteur 202 définit une zone de mesure 203. La zone de mesure 203 correspond donc à l'amplitude de positionnement du front de séparation 110 lors du fonctionnement du SST 100.

De manière préférée, le système de stockage thermique et le dispositif de détermination d'un taux de charge sont configurés pour que la zone de mesure 203 soit au minimum d'une hauteur de 25cm. À titre d'exemple, la zone de mesure 203 qui voit alternativement du MCP liquide 104 et du ciel de gaz 102 dans le haut d'une cuve 101 comprenant 10m de MCP, a une hauteur de 1 à 1.5m, en considérant une expansion volumique du MCP typiquement de l'ordre de 10-15%.

Selon l'invention, le dispositif de détermination comprend au moins un détecteur à lame vibrante 200. Dans la suite de la description, il est fait référence à une lame vibrante pour parler d'un détecteur à lame vibrante. La lame vibrante 200 est destinée à être agencée dans la zone de mesure 203. Avantageusement, la lame vibrante 200 destinée à être alternativement en contact avec le ciel de gaz 102 ou le MCP liquide 104. Avantageusement, la lame vibrante destinée à être agencée dans la zone de mesure 203 à l'exception du premier niveau de hauteur 201, de sorte que la lame vibrante 200 soit alternativement en contact avec le MCP liquide 104 et le ciel de gaz 102 sans entrer en contact avec le MCP solide 103.

Le détecteur à lame vibrante 200 est avantageusement un détecteur permettant de détecter la présence du ciel de gaz 102 ou du MCP liquide 104 préférentiellement par un signal binaire tout ou rien TOR sur la base d'un signal égal à zéro pour la présence de ciel de gaz 102 est un signal égal à un pour la présence du MCP liquide 104.

Le détecteur à lame vibrante 200 est avantageusement un détecteur ponctuel destiné à détecter la présence du ciel de gaz 102 ou du MCP liquide 104 en continue.

Selon une possibilité préférée, le dispositif de détermination d'un taux de charge comprend une pluralité de détecteurs à lame vibrante 200 disposés à des hauteurs différentes dans la zone de mesure 203. Par exemple, le dispositif comprend 5 détecteurs à lame vibrante disposés comme décrit ci-après, la position de chaque lame vibrante 200 dans la zone de mesure 203 correspond à un certain taux de charge du SST, la position de la lame vibrante 2001 correspondant au premier niveau de hauteur 201 permet de déterminer un taux de charge de l'ordre de 0 % ; la position de la lame vibrante 2005 correspond au deuxième niveau de hauteur 202 permet de déterminer un taux de charge de l'ordre de 100 % ; la position de la lame vibrante 2003 correspond à 50 % de la hauteur de la zone de mesure 203 permet de déterminer un taux de charge de l'ordre de 50 % ; la position de la lame vibrante 2002 correspond à 25 % de la hauteur de la zone de mesure 203 permet de déterminer un taux de charge de l'ordre de 25 % ; la position de la lame vibrante 2004 correspond à 75 % de la hauteur de la zone de mesure 203 permet de déterminer un taux de charge de l'ordre de 75 %.

La hauteur de la zone de mesure 203 correspond à un taux de charge à 100 % et le positionnement de la lame vibrante 200 dans la zone de mesure 203 correspond ainsi un taux de charge correspondant.

Avantageusement, le dispositif de détermination du taux de charge et le SST associé comprennent une pluralité de lames vibrantes 200. Préférentiellement, le dispositif de détermination du taux de charge comprend deux ou plus de lames vibrantes 200. À titre préféré, le dispositif de détermination comprend 3 détecteurs à lames vibrantes 200, plus préférentiellement 4 détecteurs à lames vibrantes 200, préférentiellement 5 détecteurs à lames vibrantes 200, préférentiellement 6 détecteurs à lames vibrantes 200, préférentiellement 7 détecteurs à lames vibrantes 200, préférentiellement 8 détecteurs à lames vibrantes 200, préférentiellement 9 détecteurs à lames vibrantes 200, préférentiellement 10 détecteurs à lames vibrantes 200. Plus le dispositif de détermination du taux de charge comprend de lames vibrantes 200, plus la précision de la détermination est élevée. Par exemple, avec 5 détecteurs à lames vibrantes 200, le taux de charge sera connu à 20 % près, alors qu'avec 10 détecteurs à lames vibrantes 200, le taux de charge sera connu à 10 % près.

Dans le mode de réalisation où le dispositif de détermination du taux de charge comprend une pluralité de lames vibrantes 200, les lames vibrantes 200 sont toutes agencées dans la zone de mesure 203 est préférentiellement avec un écart 206 régulier entre 2 lames vibrantes 200 successives.

La lame vibrante 200 est du type d'un détecteur piézoélectrique destiné à la détection d'un liquide ou d'un gaz.

La lame vibrante 200 est avantageusement agencée dans la cuve 100 au niveau d'une paroi latérale 113. Avantageusement, la lame vibrante 200 est agencée de manière traversante d'une paroi latérale 113. À titre d'exemple, une cuve 100 comprend classiquement des bossages en partie supérieure. La lame vibrante 200 est avantageusement agencée au travers des bossages de ce type. Ce positionnement permet une mise en place aisée du dispositif de détermination puisqu'il n'y nécessite pas de pénétrer de manière intrusive dans la cuve, il est ainsi facile de réparer ou d'entretenir la lame vibrante 200.

La lame vibrante 200 est un détecteur comprenant une première lame 403 et une deuxième lame 404 agencées face à face tel un diapason. Les lames 403,404 sont portées à leur fréquence de résonnance, par exemple de l'ordre d'une centaine de Hertz, par effet piézoélectrique. La vibration des lames 403, 404 est différente selon le milieu dans lequel se situe la lame vibrante 200. Lorsque la lame vibrante 200 est en contact avec le ciel de gaz 102, les lames 403,404 vibrent à leur fréquence de résonnance propre. Lorsque la lame vibrante 200 est en contact avec le MCP liquide 104, les lames 403,404 ont une fréquence et une amplitude de vibrations atténuées. En fonction de la fréquence et de l'amplitude de vibrations des lames 403,404, la lame vibrante 200 produit un signal électrique provoquant le basculement d'un relais. Le signal produit par le détecteur à lame vibrante 200 est avantageusement un signal tout ou rien. À titre d'exemple, lorsque le détecteur à lame vibrante 200 est en contact du ciel de gaz 102, les lames 403,404 vibrent à leur fréquence de résonnance propre, le détecteur à lame vibrante 200 transmet un signal équivalent à zéro. À l'inverse, lorsque le détecteur à lame vibrante 200 est en contact du MCP liquide 104, les lames 403,404 vibrent à une fréquence et une amplitude atténuée par rapport à la fréquence de résonnance, le détecteur à lame vibrante 200 transmet un signal équivalent à 1.

Le détecteur à lame vibrante 200 comprend une première portion 400 comprenant les 2 lames 403,404 et destinée à être agencée à l'intérieur de la cuve 101, une deuxième portion 401 destinée à assurer la connexion du détecteur à lame vibrante 200 à la cuve 101, notamment par un pas de vis, et une troisième portion 402 destinée à être agencée à l'extérieur de la cuve 101 et comprenant avantageusement un module électrique comprenant l'élément piézoélectrique permettant la mise en vibration des lames 403,404 et un moyen d'intégration destinée à transformer le signal des vibrations des lames 403,404 en un signal avantageusement tout ou rien.

Avantageusement, le dispositif de détermination comprend une carte électronique destinée à déterminer le taux de charge en fonction du signal fourni par le ou les détecteurs à lame vibrante 200 et de leur position dans la zone de mesure 203.

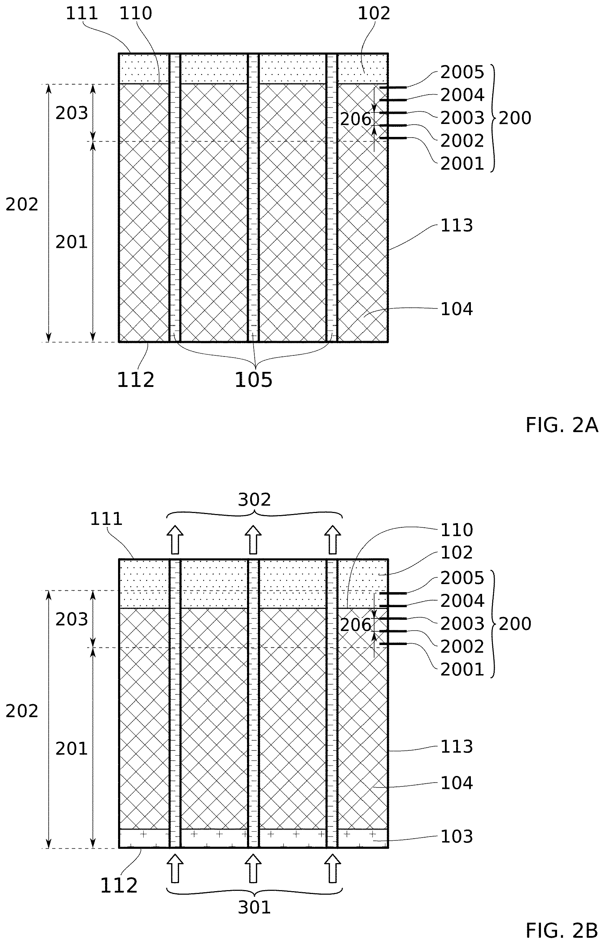

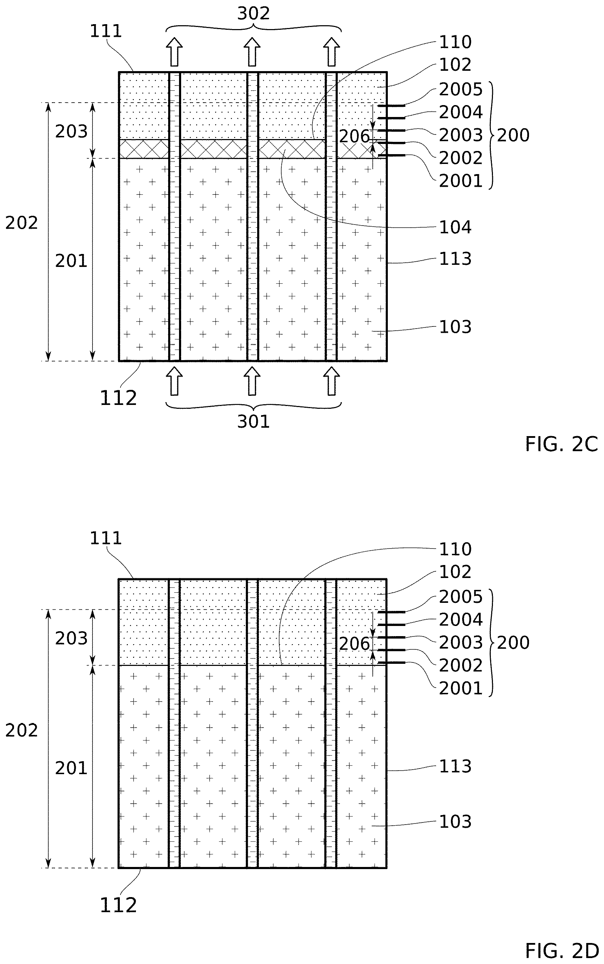

En figures 2A, 2B, 2C et 2D est illustrée la cuve 101 lors d'une décharge d'un SST comprenant un dispositif de détermination selon l'invention comprenant cinq détecteurs à lame vibrante 200. Les détecteurs à lame vibrante 200 sont agencés dans la zone de mesure 203. Lors d'une phase de décharge du SST, le MCP 104 subit une solidification, c'est-à-dire qu'il passe de l'état liquide à l'état solide.

En figures 2A, le SST est entièrement chargé, le MCP 104 est entièrement à l'état liquide. Le front de séparation 110 entre le MCP liquide 104 et le ciel de gaz 102 est sensiblement plan et avantageusement horizontal. Le front de séparation 110 se situe à un premier niveau de hauteur de 201 par rapport à la paroi inférieure 112 de la cuve 101.

En figure 2B, le faisceau de tubes 105 est alimenté depuis le distributeur inférieur 108 avec un fluide caloporteur froid 301. On entend par froid que le fluide caloporteur est à une température inférieure à la température de fusion du MCP. La solidification du MCP liquide 104 commence. Le MCP liquide 104 cède son énergie thermique au fluide caloporteur froid 301 qui ressort au niveau du distributeur supérieur 109 à un niveau de température supérieure en tant que le fluide caloporteur réchauffé 302. Le niveau de MCP liquide 104 commence à baisser par contraction volumique du MCP en partie inférieure de la cuve 101. Le front de séparation entre le MCP et le ciel de gaz 102 reste une interface liquide/gaz plane et horizontale.

En figure 2C, le SST continue à se décharger avec les mêmes circulations de fluide caloporteur en figure 2B. Le MCP est presque entièrement solidifié. Le front de séparation 110 entre le MCP et le ciel de gaz 102 reste une interface liquide/gaz plane et horizontale. En figure 2D, le SST est entièrement déchargé. Le MCP 103 est entièrement à l'état solide. Le front de séparation 110 entre le MCP et le ciel de gaz 102 est une interface solide/ air sensiblement plane et avantageusement horizontale du fait d'une solidification progressive de bas vers le haut. Le front de séparation 110 se situe un deuxième niveau de hauteur 202 par rapport à la paroi inférieure 112 de la cuve 101.

L'évolution de hauteur du front de séparation 110 entre le premier niveau de hauteur 201 et le deuxième niveau de hauteur 202 est représentative de la fraction de MCP liquide 104 dans la cuve 101 est donc de l'état de charge du SST.

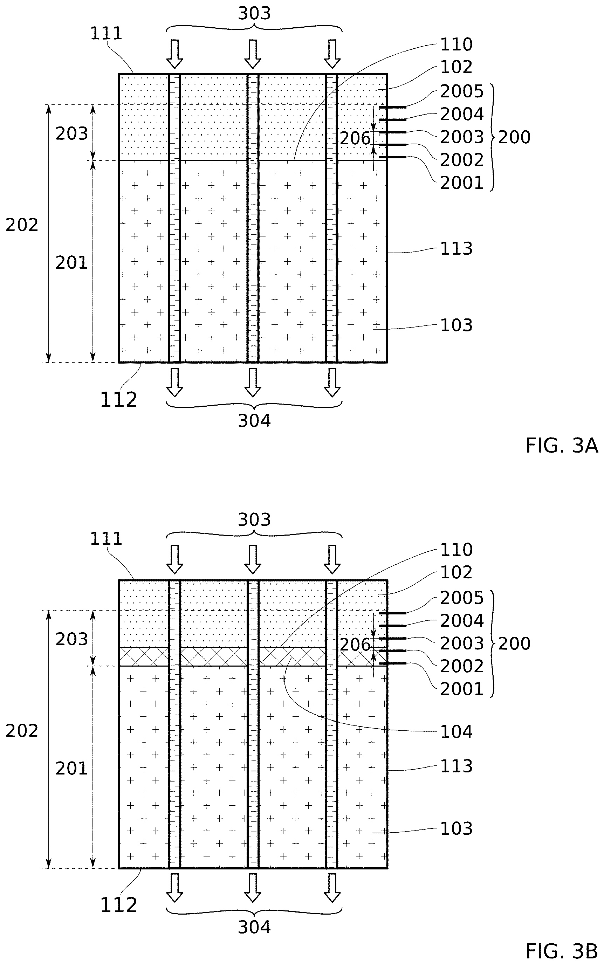

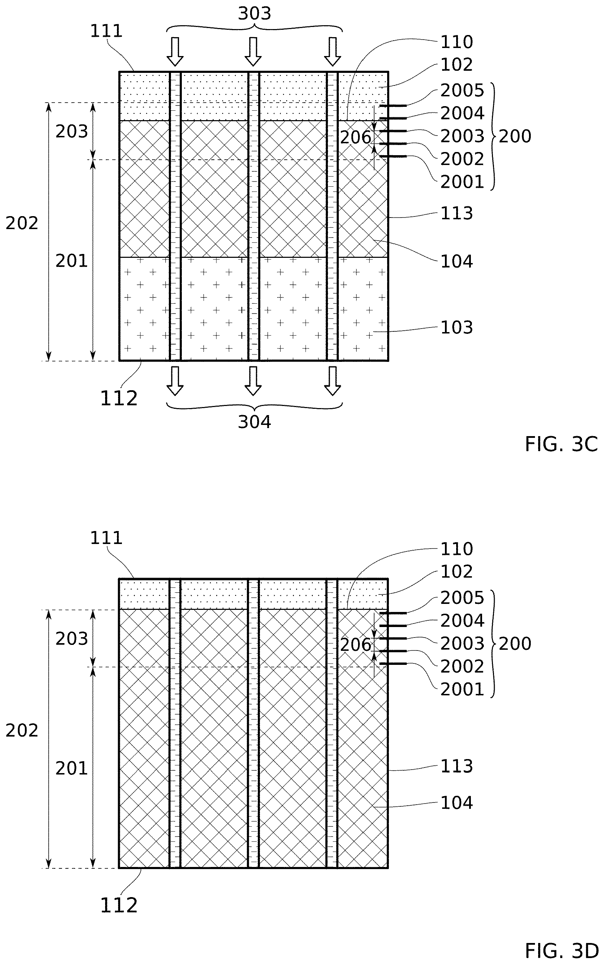

En figures 3A, 3B, 3C et 3D est illustrée la cuve 101 lors d'une charge du SST comprenant un dispositif de détermination selon l'invention comprenant cinq détecteurs à lame vibrante 200. Lors d'une phase de charge du SST, le MCP 103 subit une fusion c'est-à-dire qu'il passe de l'état solide à l'état liquide.

En figure 3A, le SST est entièrement déchargé, le MCP 103 est entièrement à l'état solide. L'interface entre le MCP solide 103 et le ciel de gaz 102 est issue de la décharge précédente donc avantageusement plane et horizontale. Le front de séparation 110 se situe à un premier niveau de hauteur 201 par rapport à la paroi inférieure 112 de la cuve 101.

En figure 3B, le faisceau de tubes 105 est alimenté depuis le distributeur supérieur 109 avec un fluide caloporteur chaud 303. On entend par chaud que le fluide caloporteur est à une température supérieure à la température de fusion du MCP. La fusion du MCP solide 103 commence. Le fluide caloporteur chaud 303 cède son énergie thermique au MCP solide 103. Le fluide caloporteur refroidi 304 ressort de la cuve 101 au niveau du distributeur inférieur 108 à un niveau de température inférieure à celle de son entrée. Le MCP solide 103 se transforme en MCP liquide 104 en partie supérieure de la cuve 101. Ce changement de phase du MCP crée le front de séparation 110 entre le MCP et le ciel de gaz 102 avec une interface MCP liquide 104/air plane et horizontale. Le niveau de MCP liquide 104 commence à augmenter par expansion volumique du MCP 103 en liquéfaction. Le front de séparation 110 commence à se déplacer.

En figure 3C, le SST continue à se charger avec les mêmes circulations de fluide caloporteur qu'en figure 3B. Le MCP est presque entièrement liquéfié. Le front de séparation 110 entre le MCP et le ciel de gaz 102 reste une interface liquide/gaz plane et horizontale.

En figure 3D, le SST est entièrement chargé. Le front de séparation 110 entre le MCP le ciel de gaz 102 et une interface liquide/air plane et horizontale. Le fond de séparation 110 se situe à un premier niveau de hauteur de 202 par rapport à la paroi inférieure 112 de la cuve 101.

Avantageusement, le profil de fusion/solidification participe au fait que le dispositif de détermination selon l'invention et le SST associé ne nécessite pas la présence d'un fluide de mesure puisque le front de séparation entre le MCP et le ciel de gaz 102 est naturellement plan et horizontal.

En figures 2 et 3, cinq détecteurs à lames vibrantes 2001, 2002, 2003, 2004, 2005 sont agencées dans la zone de mesure 203. À titre d'exemple, les lames vibrantes sont agencées de sorte que la première lame vibrante 2001 est agencée à un niveau de hauteur au-dessus du premier niveau de hauteur 201 correspondant à 10 % de la hauteur de la zone 203, la deuxième lame vibrante 2002 est agencée à un niveau de hauteur au-dessus du premier niveau de hauteur 201 correspondant à 30 % de la hauteur de la zone 203, la troisième lame vibrante 2003 est agencée à un niveau de hauteur au-dessus du premier niveau de hauteur 201 correspondant à 50 % de la hauteur de la zone 203, la quatrième lame vibrante 2004 est agencée à un niveau de hauteur au-dessus du premier niveau de hauteur 201 correspondant à 70 % de la hauteur de la zone 203, la cinquième lame vibrante 2005 est agencée à un niveau de hauteur au-dessus du premier niveau de hauteur 201 correspondant à 90 % de la hauteur de la zone 203.

En figures 2A et 3D, toutes les lames vibrantes sont en contact du ciel de gaz 102 et renvoient donc un signal de valeur zéro, le SST est déchargé, le taux de charge du SST est inférieur à 10%. Le taux de charge est déterminé par la carte électronique qui traite le signal des détecteurs à lame vibrante.

En figure 2C et 3B, deux lames vibrantes, la première lame vibrante 2001 et la deuxième lame vibrante 2002 sont en contact du MCP liquide 104 et renvoient donc un signal de valeur 1 et 3 lames vibrantes, la troisième lame vibrante 2003, la quatrième lame vibrante 2004 et la cinquième lame vibrante 2005 sont en contact du ciel de gaz 102 et renvoient donc un signal de valeur zéro. Le SST est chargé à un taux de charge comprise entre 30 et 50 %.

En figure 2D et 3A, toutes les lames vibrantes sont en contact du MCP liquide 104 et renvoient donc un signal de valeur 1, le SST est chargé, le taux de charge du SST est supérieur à 90 %.

Selon un aspect, le SST selon l'invention fonctionne en réalisant la fusion du MCP solide 103 par la circulation d'un fluide caloporteur chaud 303 depuis le distributeur supérieur 109 vers le distributeur inférieur 108, c'est-à-dire du haut vers le bas de la cuve 101. À l'inverse, la solidification du MCP liquide 104 est réalisée par la circulation d'un fluide caloporteur froid 301 depuis le distributeur inférieur 108 vers le distributeur supérieur 109 c'est-à-dire du bas vers le haut de la cuve 101. Avantageusement, dans cette configuration, la fusion du MCP 103 se fait selon un front de séparation 110 plan et horizontal de haut en bas de la cuve 101, avec un effet piston. À l'inverse, la solidification se fait selon un front de séparation 110 plan et horizontal du bas en haut. De la cuve 101.

Selon un aspect, l'invention concerne un procédé de mise en place d'un dispositif de détermination d'un taux de charge d'un SST.

Ce procédé de mise en place du dispositif de détermination comprend une première phase de définition de la zone de mesure 203dans laquelle au moins un détecteur à lame vibrante 200 doit être agencé.

Selon une possibilité préférée, cette première phase de définition de la zone de mesure 203 est réalisée par le calcul. Selon une autre possibilité, cette première phase de définition de la zone de mesure 203 est réalisée sur le SST installé. Dans cette possibilité, cette première phase de définition comprend plusieurs étapes successives. Tout d'abord, le SST est complètement déchargé. Le MCP 103 est entièrement à l'état solide. Ensuite, le premier niveau de hauteur 201 du front de séparation 110 est mesuré. La hauteur de l'interface entre le MCP solide 103 et le ciel de gaz 102, correspondant au front de séparation 110 dans cet état déchargé, est mesurée depuis la paroi supérieure 111 de la cuve, préférentiellement, c'est-à-dire depuis le fond de la cuve 101. Cette hauteur 201 correspond à la hauteur du MCP solide 103 dans cet état déchargé. Ensuite, le SST est complètement chargé. Le MCP 104 est sensiblement entièrement à l'état liquide. Enfin, le deuxième niveau de hauteur 202 du front de séparation 110 est mesuré. La hauteur de l'interface entre le MCP liquide 104 et le ciel de gaz 102, correspondant au front de séparation 110 dans cet état chargé, est mesurée depuis la paroi supérieure 111 de la cuve préférentiellement, c'est-à-dire depuis le fond de la cuve 101. Cette hauteur 202 correspond à la hauteur du MCP liquide 104 dans cet état chargé. La zone de mesure 203 se situe entre le premier niveau de hauteur 201 et le deuxième niveau de hauteur 202.

Le procédé de positionnement du dispositif de détermination selon l'invention comprend avantageusement une deuxième phase de positionnement d'au moins un détecteur à lame vibrante 200 dans la zone de mesure 203 sur une paroi latérale 113 de la cuve 101 à une hauteur prédéfinie.

Selon un mode de réalisation préféré, le procédé de mise en place du dispositif de détermination comprend la répétition de la deuxième phase de positionnement d'au moins un détecteur à lame vibrante 200 pour chaque autre détecteur à lame vibrante 200 destiné à être agencé dans la zone de mesure 203 à une hauteur différente.

Selon un autre aspect, l'invention concerne un procédé de détermination d'un taux de charge d'un SST. Selon l'invention, le procédé de détermination du taux de charge du SST comprenant la réception du signal fourni par un ou plusieurs détecteur(s) à lame vibrante 200, avantageusement par la carte électronique, puis la détermination du taux de charge en fonction du signal fourni par chaque détecteur à lame vibrante 200 et leur hauteur dans la zone de mesure 203. Avantageusement, la carte électronique fournit un taux de charge en pourcentage compris préférentiellement entre 10 et 90%, préférentiellement entre 5 et 95 %. Selon un mode de réalisation préférée, la détermination d'un taux de charge d'un SST est réalisée en continu .

Selon une possibilité, la première phase de définition de la zone de mesure 203 peut être réalisée à nouveau après un certain nombre de cycles de chargé de décharge pour s'assurer que le premier niveau de hauteur 201 et le deuxième niveau de hauteur 202 n'ont pas variés du fait de la dégradation de la qualité du MCP.

Un exemple de mise en œuvre et ci-après donné. Un système de stockage thermique 100 est constitué d'un faisceau de tubes 105 inclus dans une calandre, ou cuve, 101 montée sur pied. La calandre est fermée en haut et en bas par des fonds bombés. La cuve 101 est destinée à recevoir le MCP 103,104 de la famille des alcools gras. La cuve 101 comprend de l'ordre de 8,8 tonnes de MCP 103,104. Le faisceau de tubes 105 est constitué de 361 tubes à ailettes de longueur totale de 9000 mm pour une longueur de tubes avec ailettes de 8600 mm. Le SST a une hauteur totale hors tout de 12 m pour un diamètre de 1,40 m. Le SST est configuré pour le stockage de 800 kW.h.

Le premier niveau de hauteur 201 quand le MCP 103 est entièrement solide est de 7600 mm.

Le deuxième niveau de hauteur 202 quand le MCP 104 est entièrement liquide est de 8600 mm.

Le premier niveau de hauteur 201 et le deuxième niveau de hauteur 202 sont mesurés à partir de la plaque de distribution du bas de la cuve en contact avec le MCP.

Dix détecteurs à lame vibrante 200 sont agencés dans la zone de mesure 203 définie entre le premier niveau de hauteur 201 et le deuxième niveau de hauteur 202. Les détecteurs à lame vibrante 200 sont agencés aux hauteurs prédéfinies suivantes par rapport au-dessus de la plaque du collecteur inférieure 108 :
- 7650 mm
- 7750 mm
- 7850 mm
- 7950 mm
- 8050 mm
- 8150 mm
- 8250 mm
- 8350 mm
- 8450 mm
- 8550 mm

Dans cette configuration, lorsque tous les détecteurs à lame vibrante 200 transmettent un signal de valeur zéro, le taux de charge du SST est inférieur à 5 %. Lorsque tous les détecteurs à lame vibrante 200 transmettent un signal de valeur de un, le taux de charge du SST est supérieur à 95 %. Quand la moitié des détecteurs à lame vibrante 200 transmet une valeur de un et que l'autre moitié transmet une valeur de zéro alors le taux de charge est compris entre 45 et 55 %.

L'invention n'est pas limitée aux modes de réalisations précédemment décrits et s'étend à tous les modes de réalisation couverts par les revendications suivantes.

### LISTE DES REFERENCES

100. SST
101. Cuve
102. Ciel de gaz
103. MCP solide
104. MCP liquide
105. Faisceau de tubes
106. Ailettes
108. Distributeur inférieur
109. Distributeur supérieur
110. Front de séparation MCP/gaz
111. Paroi supérieure
112. Paroi inférieure
113. Parois latérales
200. Détecteur à lame vibrante
201. Premier niveau de hauteur
202. Deuxième niveau de hauteur
203. Zone de mesure
206. Hauteur entre deux lames vibrantes successives
301. Introduction de fluide caloporteur froid lors de la décharge (= température inférieure à la température de fusion du MCP)
302. Évacuation de fluide caloporteur réchauffé lors de la décharge (température supérieure à la température du fluide caloporteur froid)
303. Introduction de fluide caloporteur chaud lors de la charge (= température supérieure à la température de fusion du MCP)
304. Évacuation de fluide caloporteur refroidi lors de la décharge (température inférieure à la température du fluide caloporteur chaud)
400. Première Portion de lame vibrante destinée à être agencée à l'intérieur de la cuve et en contact avec le MCP liquide ou le ciel de gaz
401. Deuxième Portion de lame vibrante destinée à traverser la cuve
402. Troisième Portion de lame vibrante destinée à être extérieure à la cuve
403. Première lame
404. Deuxième lame
2001. Premier détecteur à lame vibrante
2002. Deuxième détecteur à lame vibrante
2003. Troisième détecteur à lame vibrante
2004. quatrième détecteur vibrante
2005. Cinquième détecteur à lame vibrante

## Revendications

1. Dispositif de détermination d'un taux de charge d'un système de stockage thermique (SST) (100) par chaleur latente destiné à coopérer avec un SST,
le SST (100) comprenant une cuve (101) comprenant au moins une paroi latérale (113) et recevant un MCP (103,104) solide/liquide dont le changement de phase s'accompagne d'une variation volumique, et un ciel de gaz (102), avec un échangeur thermique plongeant dans la cuve (101) et apte à recevoir un fluide caloporteur,
le SST (100) étant configuré pour qu'une partie d'un front de séparation (110) entre le ciel de gaz (102) et le MCP (103,104) ait, dans la cuve(101), une position représentative du taux de charge du SST (100),
le SST (100) étant dans un état complètement déchargé lorsque le matériau à changement de phase est sensiblement totalement dans un état solide définissant un premier niveau de hauteur (201) du front de séparation (110) et dans un état complètement chargé, lorsque le matériau à changement de phase est sensiblement totalement dans un état liquide définissant un deuxième niveau de hauteur (202) du front de séparation (110),
le dispositif comprenant au moins un détecteur destiné à être agencé sur une paroi latérale (113) de la cuve (101) et une carte électronique reliée à l'au moins un détecteur et destinée à déterminer le taux de charge du SST (100), à un moment déterminé de son fonctionnement,
**Caractérisé en ce que** :
• le au moins un détecteur est un détecteur à lame vibrante (200) destiné à être agencé à une hauteur prédéfinie dans une zone de mesure (203) dont la hauteur est définie entre le premier niveau de hauteur (201) et le deuxième niveau de hauteur (202), et à être en contact alternativement avec le ciel de gaz (102) ou le MCP liquide (104) en fonction de la variation volumique du MCP, et à fournir un signal en fonction de son contact avec le ciel de gaz (102) ou le MCP liquide (104),
• la carte électronique détermine le taux de charge du SST (100), en fonction du signal fourni par le au moins un détecteur à lame vibrante (200) et de sa hauteur prédéfinie dans la zone de mesure (203).

2. Système de stockage thermique (SST) par chaleur latente comprenant une cuve (101) comprenant au moins une paroi latérale (113) et recevant un MCP (103,104) solide/liquide dont le changement de phase s'accompagne d'une variation volumique, et un ciel de gaz (102), et un échangeur thermique plongeant dans la cuve (101) et apte à recevoir un fluide caloporteur,
le SST (100) étant configuré pour qu'une partie d'un front de séparation (110) entre le ciel de gaz (102) et le MCP (103,104) ait, dans la cuve (101), une position représentative du taux de charge du SST,
le SST (100) étant dans un état complètement déchargé lorsque le matériau à changement de phase est sensiblement totalement dans un état solide définissant un premier niveau de hauteur (201) du front de séparation (110) et dans un état complètement chargé, lorsque le matériau à changement de phase est sensiblement totalement dans un état liquide définissant un deuxième niveau de hauteur (202) du front de séparation (110),
**Caractérisé en ce que** :
le SST comprend un dispositif de détermination d'un taux de charge du SST (100) selon la revendication 1.

3. Dispositif selon la revendication 1 ou SST selon la revendication 2 comprenant une pluralité de détecteurs à lame vibrante (200) disposés à des hauteurs différentes dans la zone de mesure (203).

4. Dispositif selon l'une quelconque des revendications 1 ou 3 ou SST selon l'une quelconque des revendications 2 ou 3 dans lequel la pluralité de détecteur à lame vibrante (200) étant agencée de sorte que la hauteur (206) séparant deux détecteurs à lame vibrante (200) successifs soit identique.

5. Dispositif selon l'une quelconque des revendications 1 ou 3 à 4 ou SST l'une quelconque des revendications 2 à 4 comprenant de 2 à 10 détecteurs à lame vibrante (200).

6. Dispositif selon l'une quelconque des revendications 1 ou 3 à 5 ou SST l'une quelconque des revendications 2 à 5 ne comprenant pas de fluide de mesure additionnel.

7. Dispositif selon l'une quelconque des revendications 1 ou 3 à 6 ou SST l'une quelconque des revendications 2 à 6 dans lequel le signal fourni par le au moins un détecteur à lame vibrante (200) est un signal tout ou rien (TOR).

8. Dispositif selon l'une quelconque des revendications 1 ou 3 à 7 ou SST l'une quelconque des revendications 2 à 7 configuré pour que le front de séparation (110) soit sensiblement plan parallèle à l'horizontale lors du fonctionnement du SST.

9. Dispositif selon l'une quelconque des revendications 1 ou 3 à 8 ou SST l'une quelconque des revendications 2 à 8 dans lequel l'échangeur thermique comprend un distributeur inférieur (108) agencé en partie inférieure de la cuve (101) et un distributeur supérieur (109) agencé en partie supérieure de la cuve (101), le distributeur inférieur (108) et le distributeur supérieur (109) étant destinés à l'introduction et l'évacuation du fluide caloporteur dans l'échangeur thermique.

10. Dispositif selon l'une quelconque des revendications 1 ou 3 à 9 ou SST l'une quelconque des revendications 2 à 9 dans lequel l'échangeur thermique comprend un fluide caloporteur monophasique et l'échangeur est configuré pour assurer la circulation du fluide caloporteur depuis le distributeur supérieur (109) vers le distributeur inférieur (108) en charge et depuis le distributeur inférieur (108) vers le distributeur supérieur (109) en décharge.

11. Procédé de mise en place d'un dispositif de détermination d'un taux de charge d'un SST selon l'une quelconque des revendications 1 ou 3 à 9 comprenant :
• La définition de la zone de mesure (203) dans laquelle placer le au moins un détecteur à lame vibrante (200)
• Le positionnement du au moins un détecteur à lame vibrante (200) dans la zone de mesure (203) sur une paroi latérale (113) de la cuve (201) à une hauteur prédéfinie.

12. Procédé selon la revendication précédente comprenant la mise en place d'une pluralité de détecteurs à lame vibrante (200) dans la zone de mesure (203) à des hauteurs différentes prédéfinies.

13. Procédé de détermination d'un taux de charge d'un SST selon l'une quelconque des revendications 3 à 9 comprenant la réception du signal fourni par le au moins un détecteur à lame vibrante (200), puis la détermination du taux de charge audit moment déterminé en fonction du signal fourni par chaque détecteur à lame vibrante (200) et leur hauteur prédéfinie dans la zone de mesure (203).

## Patentansprüche

1. Vorrichtung zum Bestimmen eines Ladestatus eines Latentwärmespeichersystems (SST) (100), die zum Zusammenwirken mit einem SST bestimmt ist,
wobei das SST (100) einen Behälter (101) umfasst, der mindestens eine Seitenwand (113) umfasst und ein festes/flüssiges PCM (103, 104) aufnimmt, dessen Phasenwechsel von einer Volumenvariation begleitet ist, und einen Gasraum (102) mit einem Wärmetauscher, der in die Wanne (101) eintaucht und dazu geeignet ist, ein Kühlmittel aufzunehmen,
wobei das SST (100) dazu konfiguriert ist, dass ein Teil einer Trennfront (110) zwischen dem Gasraum (102) und dem PCM (103, 104) in dem Behälter (101) eine Position aufweist, die für den Ladestatus des SST (100) repräsentativ ist,
wobei das SST (100) in einem vollständig entladenen Zustand ist, wenn das Phasenwechselmaterial im Wesentlichen vollständig in einem festen Zustand ist, der ein erstes Höhenniveau (201) der Trennfront (110) definiert, und in einem vollständig geladenen Zustand, wenn das Phasenwechselmaterial im Wesentlichen vollständig in einem flüssigen Zustand ist, der ein zweites Höhenniveau (202) der Trennfront (110) definiert, wobei die Vorrichtung mindestens einen Detektor umfasst, der dazu bestimmt ist, an einer Seitenwand (113) des Behälters (101) eingerichtet zu sein, und eine Elektronikkarte, die mit mindestens einem Detektor verbunden und dazu bestimmt ist, den Ladestatus des SST (100) in einem bestimmten Augenblick seines Betriebs zu bestimmen,
**dadurch gekennzeichnet, dass**:
• der mindestens eine Detektor ein Schwinggabeldetektor (200) ist, der dazu bestimmt ist, in einer vordefinierten Höhe in einer Messzone (203) eingerichtet zu sein, deren Höhe zwischen dem ersten Höhenniveau (201) und dem zweiten Höhenniveau (202) definiert ist, und abwechselnd mit dem Gasraum (102) oder dem flüssigen PCM (104) in Abhängigkeit von der Volumenvariation des PCM in Kontakt zu sein und ein Signal in Abhängigkeit von seinem Kontakt mit dem Gasraum (102) oder dem flüssigen PCM (104) zu liefern,
• die Elektronikkarte den Ladestatus des SST (100) in Abhängigkeit von dem durch den mindestens einen Schwinggabeldetektor (200) gelieferten Signal und seiner vordefinierten Höhe in der Messzone (203) bestimmt.

2. Latentwärmespeichersystem (SST), das einen Behälter (101) umfasst, der mindestens eine Seitenwand (113) umfasst und ein festes/flüssiges PCM (103, 104) aufnimmt, dessen Phasenwechsel von einer Volumenvariation begleitet ist, und einen Gasraum (102) sowie einen Wärmetauscher, der in den Behälter (101) eintaucht und dazu geeignet ist, ein Kühlmittel aufzunehmen,
wobei das SST (100) dazu konfiguriert ist, dass ein Teil einer Trennfront (110) zwischen dem Gasraum (102) und dem PCM (103, 104) in dem Behälter (101) eine Position aufweist, die für den Ladestatus des SST repräsentativ ist,
wobei sich das SST (100) in einem vollständig entladenen Zustand befindet, wenn das Phasenwechselmaterial im Wesentlichen vollständig in einem festen Zustand ist, der ein erstes Höhenniveau (201) der Trennfront (110) definiert, und in einem vollständig geladenen Zustand, wenn das Phasenwechselmaterial im Wesentlichen vollständig in einem flüssigen Zustand ist, der ein zweites Höhenniveau (202) der Trennfront (110) definiert,
**dadurch gekennzeichnet, dass**:
das SST eine Vorrichtung zum Bestimmen eines Ladestatus des SST (100) nach Anspruch 1 umfasst.

3. Vorrichtung nach Anspruch 1 oder SST nach Anspruch 2, die (das) eine Vielzahl von Schwinggabeldetektoren (200) umfasst, die in unterschiedlichen Höhen in der Messzone (203) angeordnet sind.

4. Vorrichtung nach einem der Ansprüche 1 oder 3 oder SST nach einem der Ansprüche 2 oder 3, wobei die Vielzahl von Schwinggabeldetektoren (200) derart eingerichtet ist, dass die Höhe (206), die die beiden aufeinanderfolgenden Schwinggabeldetektoren (200) trennt, identisch ist.

5. Vorrichtung nach einem der Ansprüche 1 oder 3 bis 4 oder SST nach einem der Ansprüche 2 bis 4, die (das) 2 bis 10 Schwinggabeldetektoren (200) umfasst.

6. Vorrichtung nach einem der Ansprüche 1 oder 3 bis 5 oder SST nach einem der Ansprüche 2 bis 5, die (das) kein zusätzliches Messfluid umfasst.

7. Vorrichtung nach einem der Ansprüche 1 oder 3 bis 6 oder SST nach einem der Ansprüche 2 bis 6, wobei das von dem mindestens einen Schwinggabeldetektor (200) gelieferte Signal ein Binärsignal (TOR) ist.

8. Vorrichtung nach einem der Ansprüche 1 oder 3 bis 7 oder SST nach einem der Ansprüche 2 bis 7, die (das) dazu konfiguriert ist, dass die Trennfront (110) beim Betrieb des SST im Wesentlichen eben parallel zu der Horizontalen ist.

9. Vorrichtung nach einem der Ansprüche 1 oder 3 bis 8 oder SST nach einem der Ansprüche 2 bis 8, wobei der Wärmetauscher einen unteren Verteiler (108) umfasst, der im unteren Teil des Behälters (101) eingerichtet ist, und einen oberen Verteiler (109), der im oberen Teil des Behälters (101) eingerichtet ist, wobei der untere Verteiler (108) und der obere Verteiler (109) zum Einleiten und Ableiten des Kühlmittels in dem Wärmetauscher bestimmt sind.

10. Vorrichtung nach einem der Ansprüche 1 oder 3 bis 9 oder SST nach einem der Ansprüche 2 bis 9, wobei der Wärmetauscher ein Einphasen-Kühlmittel umfasst, und der Wärmetauscher dazu konfiguriert ist, die Zirkulation des Kühlmittels von dem oberen Verteiler (109) zu dem unteren Verteiler (108) beim Laden und von dem unteren Verteiler (108) zu dem oberen Verteiler (109) beim Entladen sicherzustellen.

11. Verfahren zum Einrichten einer Vorrichtung zum Bestimmen eines Ladestatus eines SST nach einem der Ansprüche 1 oder 3 bis 9, das Folgendes umfasst:
• das Definieren der Messzone (203), in der der mindestens eine Schwinggabeldetektor (200) platziert werden soll
• das Positionieren des mindestens einen Schwinggabeldetektors (200) in der Messzone (203) an einer Seitenwand (113) des Behälters (201) in einer vordefinierten Höhe.

12. Verfahren nach dem vorstehenden Anspruch, das Einrichten einer Vielzahl von Schwinggabeldetektoren (200) in der Messzone (203) in unterschiedlichen vordefinierten Höhen umfasst.

13. Verfahren zum Bestimmen eines Ladestatus eines SST nach einem der Ansprüche 3 bis 9, das das Empfangen des durch den mindestens einen Schwinggabeldetektor (200) gelieferten Signals umfasst, dann das Bestimmen des Ladestatus in dem bestimmten Augenblick in Abhängigkeit von dem durch jeden Schwinggabeldetektor (200) gelieferten Signal und deren vordefinierten Höhe in der Messzone (203).

## Claims

1. Apparatus for determining a charge rate of a thermal store system (TSS) (100) by latent heat intended to engage with a TSS,
the TSS (100) comprising a tank (101) comprising at least one side wall (113) and receiving a solid/liquid PCM (103, 104), the phase change of which being accompanied by a volume variation, and a headspace (102), with a heat exchanger being immersed in the tank (101), and capable of receiving a heat-transfer fluid,
the TSS (100) being configured such that a part of a separation front (110) between the headspace (102) and the PCM (103, 104) has, in the tank (101), a position representative of the charge rate of the TSS (100),
the TSS (100) being in a completely discharged state, when the phase change material is substantially totally in a solid state, defining a first level of height (201) of the separation front (110) and in a completely charged state, when the phase change material is substantially totally in a liquid state, defining a second level of height (202) of the separation front (110),
the apparatus comprising at least one detector intended to be arranged on a side wall (113) of the tank (101) and an electronic board connected to the at least one detector, and intended to determine the charge rate of the TSS (100), at a determined moment of its operation,
**characterised in that**:
• the at least one detector is a vibrating strip detector (200), intended to be arranged at a predefined height in a measuring zone (203), the height of which is defined between the first level of height (201) and the second level of height (202), and to be in contact alternatively with the headspace (102) or the liquid PCM (104) as a function of the volume variation of the PCM, and to provide a signal as a function of its contact with the headspace (102) or the liquid PCM (104),
• the electronic board determines the charge rate of the TSS (100), as a function of the signal provided by the at least one vibrating strip detector (200) and of its predefined height in the measuring zone (203).

2. Thermal store system (TSS) by latent heat comprising a tank (101) comprising at least one side wall (113) and receiving a solid/liquid PCM (103, 104), the phase change of which is accompanied by a volume variation, and a headspace (102), and a heat exchanger being immersed in the tank (101), and capable of receiving a heat-transfer fluid,
the TSS (100) being configured, such that a part of a separation front (110) between the headspace (102) and the PCM (103, 104) has, in the tank (101), a position representative of the charge rate of the TSS,
the TSS (100) being in a completely discharged state, when the phase change material is substantially totally in a solid state, defining a first level of height (201) of the separation front (110), and in a completely charged state, when the phase change material is substantially totally in a liquid state, defining a second level of height (202) of the separation front (110),
**characterised in that**:
the TSS comprises an apparatus for determining a charge rate of the TSS (100) according to claim 1.

3. Apparatus according to claim 1, or TSS according to claim 2, comprising a plurality of vibrating strip detectors (200) disposed at different heights in the measuring zone (203).

4. Apparatus according to any one of claims 1 or 3, or TSS according to any one of claims 2 or 3, wherein the plurality of vibrating strip detectors (200) being arranged, such that the height (206) separating two successive vibrating strip detectors (200) is identical.

5. Apparatus according to any one of claims 1 or 3 to 4, or TSS according to any one of claims 2 to 4, comprising 2 to 10 vibrating strip detectors (200).

6. Apparatus according to any one of claims 1 or 3 to 5, or TSS according to any one of claims 2 to 5, not comprising any additional measuring fluid.

7. Apparatus according to any one of claims 1 or 3 to 6, or TSS according to any one of claims 2 to 6, wherein the signal provided by the at least one vibrating strip detector (200) is an all or none (AON) signal.

8. Apparatus according to any one of claims 1 or 3 to 7, or TSS according to any one of claims 2 to 7, configured such that the separation front (110) is substantially flat, parallel to the horizontal, during the operation of the TSS.

9. Apparatus according to any one of claims 1 or 3 to 8, or TSS according to any one of claims 2 to 8, wherein the heat exchanger comprises a lower distributor (108) arranged in the lower part of the tank (101) and an upper distributor (109) arranged in the upper part of the tank (101), the lower distributor (108) and the upper distributor (109) being intended to introduce and discharge the heat-transfer fluid into the heat exchanger.

10. Apparatus according to any one of claims 1 or 3 to 9, or TSS according to any one of claims 2 to 9, wherein the heat exchanger comprises a monophase heat-transfer fluid, and the exchanger is configured to ensure the circulation of the heat-transfer fluid from the upper distributor (109) to the charged lower distributor (108) and from the lower distributor (108) to the discharged upper distributor (109).

11. Method for implementing an apparatus for determining a charge rate of a TSS according to any one of claims 1 or 3 to 9, comprising:
• the definition of the measuring zone (203), wherein the at least one vibrating strip detector (200) is placed,
• the positioning of the at least one vibrating strip detector (200) in the measuring zone (203) on a side wall (113) of the tank (201) at a predefined height.

12. Method according to the preceding claim, comprising the implementation of a plurality of vibrating strip detectors (200) in the measuring zone (203) at predefined different heights.

13. Method for determining a charge rate of a TSS according to any one of claims 3 to 9, comprising the reception of the signal provided by the at least one vibrating strip detector (200), then the determination of the charge rate at said determined moment, as a function of the signal provided by each vibrating strip detector (200) and their predefined height in the measuring zone (203).
